# EUROPÄISCHE PATENTSCHRIFT

(11) **EP 2 093 128 B1**
(45) Veröffentlichungstag und Bekanntmachung des Hinweises auf die Patenterteilung: **10.04.2013**
(21) Anmeldenummer: 09002182.5
(22) Anmeldetag: 17.02.2009
(51) Int. Cl.: B62D 11/04, B62D 11/00

(54) **Lenkvorrichtung für ein Fahrzeug mit hydraulischem Einzelradantreib, derartiges Fahrzeug und Verfahren zum lenkbaren Antrieb eines solchen Fahrzeugs**
Steering device for a vehicle with hydraulic single wheel drive, such a vehicle and method for steerable driving such a vehicle
Dispositif de direction pour un véhicule doté d'un entraînement individuel hydraulique des roues, un tel véhicule et procédé d'entraînement orientable d'un tel véhicule

(30) Priorität: 21.02.2008 DE 102008010335
(43) Veröffentlichungstag der Anmeldung: 26.08.2009
(73) Patentinhaber: agria-Werke GmbH, 74219 Möckmühl (DE)
(72) Erfinder:
(74) Vertreter: Lempert, Jost

(56) Entgegenhaltungen:
- CH-A5- 689 015
- DD-A- 72 691
- DE-A1- 3 920 143
- US-A- 4 069 886

## Beschreibung

Die Erfindung betrifft eine Lenkvorrichtung für ein Fahrzeug mit wenigstens einer lenkbaren Antriebsachse mit hydraulischem Einzelradantrieb, einem geschlossenen Hydraulikkreislauf mit einer Verstellpumpe zur Förderung der Hydraulikflüssigkeit in beiden die Fahrtrichtung bestimmenden Richtungen, zwei seriell geschalteten, den Antrieb bildenden Hydromotoren und einer durch einen Lenkhebel des Fahrzeugs betätigbaren Schieberanordnung mit einem Gehäuse und einem darin beweglichen Schieber zur Beaufschlagung der beiden Hydromotoren mit Hydraulikflüssigkeit in einer Antriebsströmungsrichtung. Die Erfindung betrifft weiterhin ein Verfahren zum lenkbaren Antreiben eines Fahrzeugs mit wenigstens einer lenkbaren Antriebsachse mit hydraulischem Einzelradantrieb, einem geschlossenen Hydraulikkreislauf mit einer Verstellpumpe zur Förderung der Hydraulikflüssigkeit in beiden die Fahrtrichtung bestimmenden Richtungen, zwei seriell geschalteten, den Antrieb bildenden Hydromotoren und einer durch einen Lenkhebel des Fahrzeugs betätigbaren Schieberanordnung, mit einem Gehäuse und einem darin beweglichen Schieber zur Beaufschlagung der beiden Hydromotoren mit Hydraulikflüssigkeit in einer Antriebsströmungsrichtung.

Fahrzeuge dieser Art werden vornehmlich in Form von Einachsfahrzeugen in der Land- und Forstwirtschaft, im Gartenbau und im Kommunalbereich zur Bodenbearbeitung, Rasen-, Wegepflege etc. eingesetzt. Sie werden von einem Benutzer unmittelbar geführt und gesteuert. Für eine einfache Handhabung durch den Benutzer sind die Antriebsräder des Einachsfahrzeugs mit hydraulischem Einzelradantrieb ausgestattet, der eine einfache und insbesondere wahlweise unterschiedliche Steuerung der Drehzahl der beiden Antriebsräder gestattet, um eine Kurvenfahrt oder eine Wende problemlos und komfortabel zu ermöglichen.

Die EP O 879 753 A2 zeigt ein gattungsgemäßes Fahrzeug mit wenigstens einer lenkbaren Antriebsachse mit hydraulischem Einzelradantrieb, bei dem zur Sicherstellung einer drehsinngerechten Steuerung bei Vorwärts- und Rückwärtsfahrt eine Ventilanordnung mit einer Drehschieberanordnung vorgesehen ist, wobei ein Gehäuse der Drehschieberanordnung in zwei verschiedenen Querschnittsebenen jeweils beiderseits des Drehschiebers angeordnete Bohrungen aufweist, die für beide Ebenen mit den Hydromotoren und auf zumindest einer Ebene mit einer Verstellpumpe verbunden sind. Wenn auch das bekannte Fahrzeug mit der Drehschieberanordnung aufgrund der dortigen Ausgestaltung eine drehsinngerechte Steuerung bei Vorwärts- und Rückwärtsfahrt ermöglicht, so ist die Ausgestaltung des Drehschiebers dennoch kompliziert und dieser lediglich aufwändig herzustellen.

Die DE 39 20 143 A1 zeigt eine Vorrichtung zum Lenken eines handgeführten Arbeitsgeräts mit Einzelradantrieb der beiden Räder in jeweils Hydromotoren mit individuellen Ventilblöcken und diesen zugeordnete Hydraulikzylinder zugeordnet sind, die letztere über eine Schlauchverbindung verbunden sind.

Die DD 72 691 A zeigt eine Steuereinrichtung für hydrostatischen Antrieb eines Fahrzeugs mit Einzelradantrieb mit einem Steuergerät mit Kurvenscheiben, durch welche in einem Gehäuse angeordnete Stößel und Schieber für Ventile betätigt werden.

Die CH 689 015 A5 zeigt ein Verfahren zur Antriebssteuerung eines Einachstraktors, wobei eine gemeinsame Ventilanordnung vorgesehen ist, die zwei parallel angeordnete Lenkventile mit Ventilstößel aufweist, auf die ein über einen Steuerstengel betätigbarer Einstellhebel wirkt, um so den Hydraulikzufluss zu den Rädern individuell zu steuern.

Die US 4 069 886 A zeigt ebenfalls ein Fahrzeug mit Einzelradantrieb und einer Kombination von seriell und parallel zueinander angeordneten Ventilen mit Flussteilern, um so die hydraulischen Antriebsmotoren der Räder in gewünschter Weise anzutreiben. Eine Richtungssteuerung spricht auf die Steuerung eines Bedieners an, wobei Kupplungsbetätigungen automatisch ausgeführt werden, indem ein Steuerteil eines Systemfluids zu den entsprechenden Kupplungen geleitet wird, um eine normale Feder-Sperr-Wirkung derselben aufzuheben.

Der Erfindung liegt die Aufgabe zugrunde, bei Beibehaltung des Vorteils einer drehsinngerechten Steuerung bei Vorwärts- und Rückwärtsfahrt eine konstruktiv einfache Ausgestaltung einer gattungsgemäßen Lenkvorrichtung bzw. für ein Fahrzeug und ein entsprechendes Fahrzeug sowie ein Verfahren zum Lenken eines derartigen Fahrzeugs zu schaffen.

Erfindungsgemäß wird die genannte Aufgabe bei einer gattungsgemäßen Lenkvorrichtung gelöst durch die kennzeichnenden Merkmale des Anspruchs 1.

Die Erfindung sieht zur Lösung der genannten Aufgabe bei einem gattungsgemäßen Verfahren die kennzeichnenden Merkmale des Anspruchs 1 vor.

Ein erfindungsgemäßes Fahrzeug zeichnet sich durch eine erfindungsgemäße Lenkvorrichtung aus.

Durch die erfindungsgemäßen Maßnahmen wird in einfacher Weise mit einem linear bewegbaren Schieber oder Linearschieber in Abweichung von einem Drehschieber eine drehsinngerechte Steuerung bei Vorwärts- und Rückwärtsfahrt erreicht. Die Schieberanordnung weist eine Verbindungsleitung, sei es im Schieber, sei es im Gehäuse auf, mit der in Neutralstellung zur Geradeausfahrt die unmittelbare serielle oder Reihen-Verbindung der beiden Hydromotoren hergestellt wird und bei der ebenfalls vorhandene Bypässe (sei es im Schieber oder dessen Gehäuse) nicht aktiv sind, während bei Kurvenfahrt und hierzu erfolgter Auslenkung des Schiebers aus seiner Neutralstellung mindestens ein Bypass progressiv geöffnet wird, so dass der entsprechend dem Bypass zugeordnete Hydromotor von einem geringeren Flüssigkeitsvolumenstrom durchströmt wird, als der andere Hydromotor und damit eine Kurvenfahrt bewirkt wird.

Während der Kurven-äußere Motor mit dem von der Pumpe gelieferten Ölstrom durchflossen wird, wird dem Kurven-inneren Motor, proportional zur Lenkstellung der Ölstrom verändert. Bei vollem Lenkausschlag wird der Ölstrom durch einen Bypass am Kurven-inneren Motor vorbeigeführt. Der Kurven-innere Motor wird durch Tastbohrungen so beaufschlagt, dass dieser mit dem entsprechenden Systemdruck gehalten wird. Dadurch wird ein generatorisches Weglaufen des entsprechenden Motors verhindert.

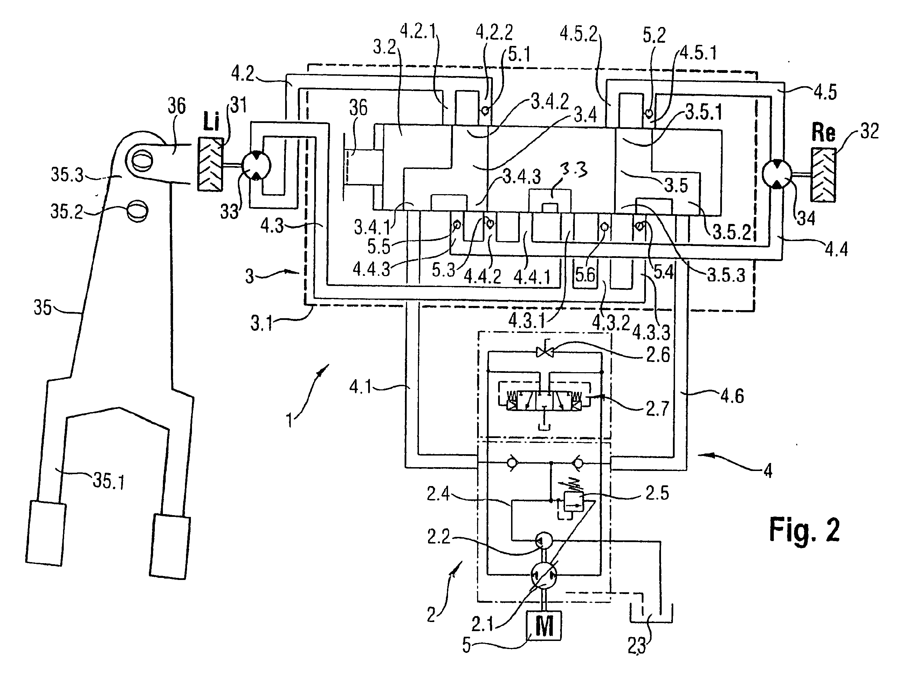

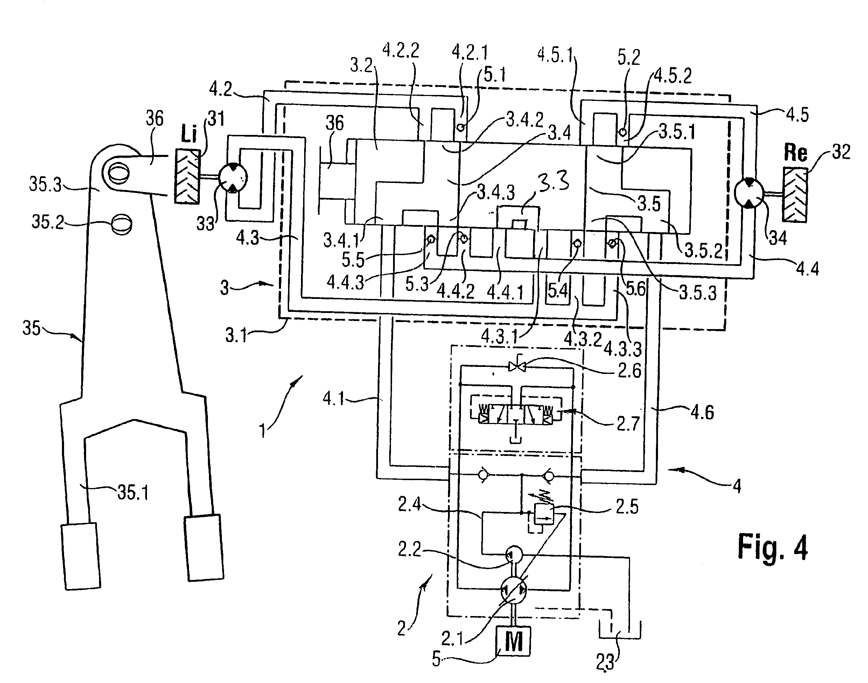

In Lenkstellung wird durch zumindest einen zugeordneten Bypass - siehe Figuren 2 und 4 - eine direkte Verbindung von der einem Hydromotor zuströmenden Hydraulikflüssigkeit mit seiner stromab gelegenen Seite hergestellt, derart, dass nur der Differenzvolumenstrom durch den gleichen Hydromotor fließt und somit die Umdrehungsgeschwindigkeit des entsprechenden Hydromotors reduziert wird.

In bevorzugter Ausgestaltung ist vorgesehen, dass bei vollem Lenkausschlag die Verbindungsleitung gesperrt ist und entsprechend der Auslenkung einer der Hydromotoren blockiert ist, wobei insbesondere bei Vollauslenkung in eine Lenkrichtung der stromab gelegene Hydromotor über den Bypass des stromauf gelegenen Hydromotors angetrieben wird und dass der stromauf gelegene Hydromotor entgegen der Antriebsströmungsrichtung mit Hydraulikflüssigkeit beaufschlagt und derart blockiert wird.

Damit der zum Stillstand bestimmte Motor die generatorische Last aufnehmen kann, wird dieser durch eine Tastbohrung mit dem Hochdruck verbunden und dadurch eingespannt. Demgemäß wird bei Vollausschlag der gesamte Volumenstrom zwar durch den einen Hydromotor geleitet, aber am anderen Hydromotor durch den Bypass vorbeigeführt, beaufschlagt diesen also nicht, so dass eine enge Kurvenfahrt möglich ist, bei der das dem nicht beaufschlagten Hydromotor zugeordnete Rad blockiert ist, also praktisch steht und damit durch das andere Rad das Fahrzeug um das blockierte Rad als nahezu im Mittelpunkt herumbewegt werden kann und eine enge Wende gefahren werden kann.

Andere bevorzugte Ausgestaltungen der erfindungsgemäßen Vorrichtung zeichnen sich dadurch aus, dass zwei h-Verbindungen der Schieberanordnung, die in einer Neutralstellung für Geradeausfahrt des Schiebers jeweils einen Leitungsabschnitt des Hydraulikkreislaufes mit jeweils einem Hydroantrieb verbinden, gegenüber einem unmittelbar mit dem jeweils anderen Hydroantrieb verbundenen Leitungsabschnitt des Hydraulikkreislaufes aber gesperrt sind, wobei insbesondere die h-Verbindungsleitungen im Schieber angeordnet sind oder die zwei h-Verbindungsleitungen symmetrisch zu einer zur Längsachse senkrechten Mittelebene des Schiebers angeordnet sind.

Weiterhin kann vorgesehen sein, dass einem direkt mit der Fluidversorgung in Verbindung stehenden Leitungsabschnitt zugeordnete Öffnungen in Verschiebungsrichtung des Schiebers breiter als die zugeordneten Öffnungen des Leitungsabschnitts sind. Sie weisen insbesondere eine derartige Breite auf, dass noch bei vollem Lenkausschlag des Lenkhebels der volle Querschnitt der Verbindungsleitung in die Öffnung mündet. Eine weitere Ausgestaltung sieht vor, dass ein eine Verbindung zwischen einer der h-Verbindungen und einen ersten Hydromotor herstellender erster Leitungsabschnitt zwei Verbindungszweige aufweist, von denen der zweite mit einem eine Strömung vom ersten Leitungsabschnitt in die h-Verbindung blockierendes Rückschlagelement aufweist und dass in Neutralstellung und bei nicht vollem Lenkausschlag des Lenkhebels die Öffnung der h-Verbindung zumindest auch mit dem Zweig in Verbindung steht, aber bei Vollausschlag des Lenkhebels von diesem Zweig getrennt ist und nur noch mit dem mit dem Rückschlagventil versehenen Zweig in Verbindung steht, wobei insbesondere die Breite der zweiten Öffnung der h-Verbindung in Bewegungsrichtung des Schiebers höchstens so groß ist, wie der Abstand der dem ersten Zweig abgewandten Wandung des zweiten Zweiges des jeweiligen Leitungsabschnitts zu der dem zweiten Zweig zugewandten Wandung des ersten Zweiges.

Darüber hinaus sieht die Erfindung vor, dass die Breite einer dritten Öffnung der h-Verbindung in Schieberichtung höchstens so groß, vorzugsweise genauso groß ist, wie der Abstand der einander zugewandten Wandungen der mit Rückschlagventilen versehenen Zweige eines weiteren Leitungsabschnitts von der h-Verbindung zum jeweils anderen Hydromotor und/oder dass eine Bypassverbindung bei Auslenkung des Lenkhebels zwischen der ersten Öffnung und der dritten Öffnung der jeweiligen h-Verbindung ausschließlich zur Umgebung des Hydromotors hergestellt wird, in Richtung dessen zugeordneten Rades die Kurvenfahrt erfolgen soll.

Weitere Vorteile und Merkmale der Erfindung ergeben sich aus den Ansprüchen und aus der nachfolgenden Beschreibung, in der ein Ausführungsbeispiel der Erfindung unter Bezugnahme auf die Zeichnung im Einzelnen erläutert ist. Dabei zeigt:
- **Fig.1**: eine bevorzugte Ausgestaltung des Lenkmechanismus des erfindungsgemäßen Fahrzeugs des Lenkhebels;
- **Fig. 2**: die gleiche Ausgestaltung in schematischer Darstellung bei einem leichten Lenkausschlag nach rechts;
- **Fig. 3**: eine entsprechende Darstellung bei maximalem Lenken nach rechts;
- **Fig. 4**: eine entsprechende Darstellung bei leichtem Lenkausschlag nach links; und
- **Fig. 5**: eine schematische Darstellung des Lenkmechanismus bei maximalem Lenken nach links.

Die Figuren zeigen eine schematische Darstellung einer erfindungsgemäßen Lenkvorrichtung 1 eines erfindungsgemäßen Fahrzeugs, das in der Zeichnung selbst nicht näher dargestellt ist und von dem neben der Lenkvorrichtung 1 lediglich die Antriebsräder, nämlich das linke Rad 31 und das rechte Rad 32 dargestellt sind.

Die erfindungsgemäße Lenkvorrichtung 1 weist eine Versorgungseinheit 2 sowie eine Schieberanordnung 3 auf, die durch einen Hydraulikkreislauf 4 miteinander verbunden sind. Im Hydraulikkreislauf 4 befindet sich für jedes Rad 31, 32 ein Antrieb in Form eines Hydromotors 33 (für das Rad 31) und eines Hydromotors 34 (für das Rad 32). Die Antriebe 33, 34 sind in Serie geschaltet, wobei beispielsweise bei Vorwärtsbewegung, die im Folgenden beschrieben wird, der Hydromotor 33 stromauf des Hydromotors 34 in den Hydraulikkreislauf 4 geschaltet ist. Bei Rückwärtsbewegung wird durch Ändern des Pumpenschwenkwinkels der Verstellpumpe 2.1 die Fließrichtung des Hydrauliköls geändert, es erfolgt also eine Umkehrung der Pumprichtung, womit dann der Hydromotor 34 stromauf des Hydromotors 33 im Hydraulikkreislauf 4 geschaltet wäre. Durch das Schiebersystem stimmt dann wieder der Lenksinn des Lenkholmens.

Die Hydraulik-Versorgungseinheit 2 weist die schon erwähnte Verstellpumpe 2.1 auf; durch Verstellen des Schwenkwinkels kann die Fahrgeschwindigkeit verändert werden. Die Pumpe 2.1 wird durch einen Motor 5, wie einen Benzinmotor oder auch einen Elektromotor des Fahrzeugs angetrieben. Die Pumpe 2.1 fördert Hydraulikflüssigkeit durch den Hydraulikkreislauf 4.

Zur Aufrechterhaltung des Hydraulikfüllvolumens und -drucks ist eine Füllpumpe 2.2 vorgesehen, die ebenfalls von dem Motor 5 über eine Kupplung mit angetrieben wird. Die Füllpumpe 2.2 wird durch einen Hydrauliktank 2.3 versorgt und steht über Leitungen 2.4 mit dem Hydraulikkreislauf 4 in Verbindung. Die Hydraulikversorgungseinheit 2 weist weiterhin ein Fülldruckbegrenzungsventil 2.5 auf; dieses ist mit der Füllpumpe 2.2 und zwei Nachsaugventilen verbunden. Die beiden Nachsaugventile sind mit den Hochdruckanschlüssen der Verstellpumpe 2.1 verbunden.

Weiterhin ist ein Freilaufventil 2.6 vorhanden, bei dessen Öffnen die Hydraulikflüssigkeit bei laufender Verstellpumpe 2.1 innerhalb der Versorgungseinheit 2 umgewälzt, die Räder aber nicht angetrieben werden.

Durch ein Spülventil 2.7 wird der Kreislauf mit dem überschüssigen Öl, das von der Füllpumpe geliefert wird gereinigt und gekühlt.

Die Schieberanordnung 3 weist ein Gehäuse 3.1 und einen in diesem verschiebbaren Schieber 3.2 auf, der über einen Lenkhebel 35 bewegbar ist, der wiederum von einem - nicht dargestellten - Lenkholm des Fahrzeugs aus betätigbar ist. Der Lenkhebel ist in der dargestellten schematischen Darstellung bei 35.1 schwenkbar gelagert.

Der Schieber 3.2 ist in seiner Längsrichtung entsprechend dem Doppelpfeil v verschiebbar. Er ist zu seiner Längsachse stehenden Mittelebene M symmetrisch ausgebildet und er weist eine Verbindungsleitung 3.3 sowie beidseits der Mittelebene zwei h-förmige Fluidverbindungen 3.4, 3.5 (h-Verbindung) auf, die weiter unten noch näher beschrieben werden.

Der Schieber 3.2 ist durch einen Lenkhebel 35 über eine Lenkstange 36 axial verschiebbar. Der Lenkhebel 35 weist eine Betätigungsseite 35.1, einen Anlenkpunkt 35.2 und eine auf die Lenkstange 36 wirkende Wirkseite 35.3 auf.

Der Hydraulikkreislauf 4 weist in Strömungsrichtung bei Vorwärtsantrieb die folgenden Leitungsabschnitte auf: Von der Verstellpumpe 2.1 der Versorgungseinheit 2 führt ein erster Leitungsabschnitt 4.1 in das Schiebergehäuse 3.1 und dort zu einer Einlass-Öffnung 3.4.1 oder ersten Öffnung der h-Verbindung 3.4.

Von einer auf der gegenüberliegenden Seite der Längsmittelachse m des Schiebers 3.2 liegenden Auslass-Öffnung 3.4.2 der h-Verbindung 3.4 führt ein zweiter Leitungsabschnitt 4.2 zum ersten Hydromotor 33 und von dort ein dritter Leitungsabschnitt 4.3, der zur Verbindungsleitung 3.3 innerhalb des Schiebers 3.2 führt. Von diesem führt über einen ersten Zweig 4.4.1 einer weiteren Leitung 4.4 letzere zum Einlass des zweiten Hydromotors 34 des rechten Rads 32. Ein weiterer Leitungsabschnitt 4.5 führt zu einer Einlass-Öffnung 3.5.1 oder zweiten Öffnung der h-Verbindung 3.5 im Schieber 3.2, die mit der Auslass-Öffnung 3.4.2 der ersten h-Verbindung 3.4 korrespondiert und auf der gleichen Seite des Schiebers relativ zur Längsmittelachse m liegt. Von einem mit der ersten Einlass-Öffnung 3.4.1 der h-Verbindung 3.4 entsprechenden Auslass-Öffnung 3.5.2 der ersten Öffnung der h-Verbindung 3.5 auf der anderen Seite des Schiebers 3.2 relativ zur Längsmittelachse m führt ein Auslassleitungsabschnitt 4.6 zur Versorgungseinheit 2 und genauer zum Einlass der Verstellpumpe 2.1.

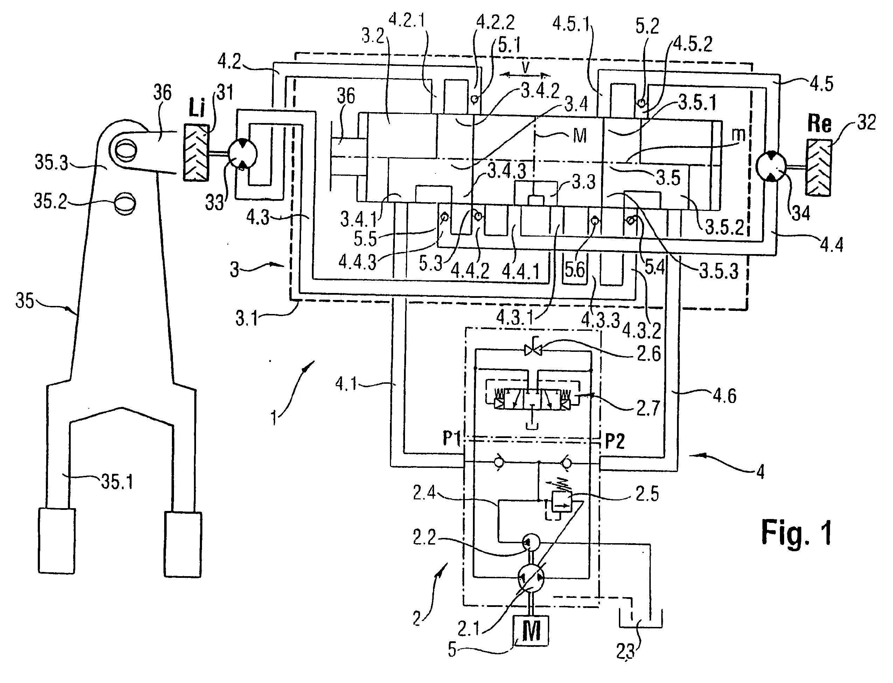

Die Leitung 4.2 weist einen ersten und einen zweiten Einlasszweig 4.2.1 und 4.2.2 auf, die in Erstreckungsrichtung des Schiebers 3.2 bzw. in Verschieberichtung desselben mit Axialabstand zueinander angeordnet sind und in der in Fig. 1 dargestellten Neutralstellung beide in Fluidverbindung mit der zweiten Öffnung 3.4.2 stehen, wobei der Zweig 4.2.2 mit einem Rückschlagventil 5.1 versehen ist, das nur eine Strömung vom Auslass 3.4.2 in die Leitung 4.2 zulässt, nicht aber umgekehrt.

Entsprechend ist die Leitung 4.5 schieberseitig mit einem ersten und einem zweiten Zweig 4.5.1, 4.5.2 versehen, die symmetrisch zu den Zweigen der Leitung 4.2 angeordnet sind, wobei hier allerdings in dem der Stirnseite des Schiebers 3.2 nahen Zweig 4.5.2 ein Rückschlagventil 5.2 vorgesehen ist, das einen Fluss aus der Leitung 4.5 in die h-Verbindung 3.5 sperrt und nur eine umgekehrte Strömung zulässt.

In entsprechender Weise weisen die Leitungen 4.3 und 4.4 erste, zweite und dritte Verbindungszweige 4.3.1, 4.3.2, 4.3.3 bzw. 4.4.1, 4.4.2, 4.4.3 zum Schieber 3.2 auf, die in Schieberichtung mit axialem Relativabstand zueinander angeordnet sind, wobei die Zweige 4.3.2 und 4.4.2 aufgrund von Rückschlagventilen 5.4, 5.3 lediglich einen Fluss in die h-Verbindung 3.5 bzw. 3.4 zulässt und in Gegenrichtung sperren, während in den Zweigen 4.3.3 und 4.4.3 Rückschlagventile 5.6, 5.5 angeordnet sind, die lediglich einen Fluss aus der h-Verbindung 3.5 bzw. 3.4 des Schiebers 3.2 in die Leitungen 4.3 bzw. 4.4 erlauben, in der Gegenrichtung aber sperren.

Die Funktionsweise der erfindungsgemäßen Lenkeinrichtung 1 mit der erfindungsgemäß beschriebenen Schieberanordnung 3 ist folgendermaßen:

In der Neutralstellung, bei der der Lenkhebel 35 sich in einer Mittelstellung befindet und eine Geradeausfahrt bewirkt werden soll, fördert die Verstellpumpe 2.1 Hydraulikflüssigkeit direkt in den Leitungsabschnitt 4.1 des Fluidkreislaufes 4. Die gesamte Hydraulikflüssigkeit strömt durch die h-Verbindung 3.4, den Leitungsabschnitt 4.2 und zunächst durch den Hydromotor 33 und treibt dort das linke Rad 31 an. Sie fließt weiter über den Leitungsabschnitt 4.3 durch die Verbindungsleitung 3.3 des Schiebers 3.2, von dort über den Leitungsabschnitt 4.4 insgesamt durch den Hydromotor 34 und treibt damit mit der gleichen Fluidmenge in gleicher Weise, wie das linke Rad 31 das rechte Rad 32 an, wodurch die gewünschte Geradeausfahrt bewirkt wird. Die Hydraulikflüssigkeit fließt über den Leitungsabschnitt 4.5, die h-Verbindung 3.5 und den Leitungsabschnitt 4.6 zurück zur Verstellpumpe 2.1.

Wird der Lenkhebel 35 bedienungsseitig nach links bewegt, so dass sich seine Betätigungsseite 35.1 um den Anlenkpunkt 35.2 mittels der Wirkseite 35.3 des Lenkhebels 35 nach rechts bewegt, so wird hierdurch der Schieber 3.2 bei einem leichten Lenkausschlag nach rechts in die in Fig. 2 dargestellte Position verschoben. Hierdurch wird, wie im Folgenden beschrieben, die Fahrt einer Rechtskurve bewirkt.

Diese Schieberstellung bewirkt gegenüber der Neutralstellung der Fig. 1 im Wesentlichen, dass die Öffnung 3.5.3 der h-Verbindung 3.5, die in der Neutralstellung gesperrt war und insbesondere mit keinem der Zweige 4.3.2, 4.3.3 in Verbindung stand und nun mit dem Zweig 4.3.3 in Fluidverbindung gebracht wird, während der Einlass 3.5.1 der h-Verbindung 3.5 immer noch in gewisser Weise mit dem Zweig 4.5.1 des Leitungsabschnitts 4.5 in Verbindung steht.

Dies bewirkt, dass ein Teil des strömenden Fluids aus von dem linken Hydromotor 33 kommenden Leitung 4.3 über deren Zweig 4.3.3 und die Öffnung 3.5.3 in die h-Verbindung 3.5 eintritt und aus dieser über deren Auslassöffnung 3.5.2 in die Auslassleitung 4.6 im Bypass zum Hydromotor 34 strömen kann, ohne durch den Hydromotor 34 hindurchzuströmen, wodurch weniger Volumenstrom durch den Hydraulikmotor 34 strömt und damit das rechte Rad 32 mit einem geringeren Volumenstrom beaufschlagt wird, dadurch wird die Drehzahl des rechten Motors verringert, der linke Motor wird mit dem gesamten eingestellten Ölstrom durchflossen, was zu einer Rechtskurve führt.

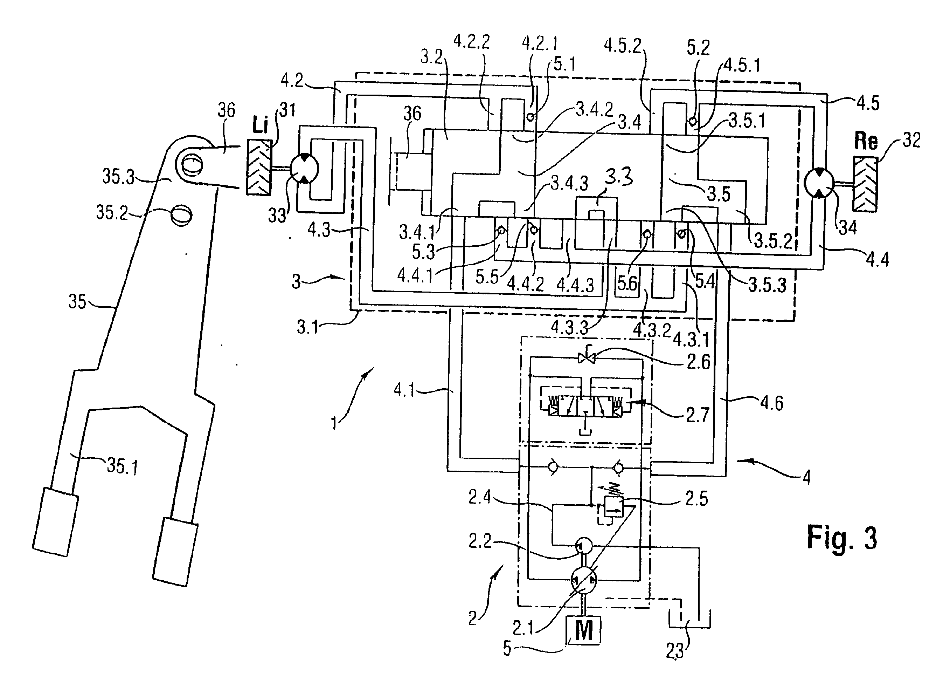

Bei vollem Lenkausschlag zum Rechtsfahren, wie er in der Fig. 3 dargestellt ist, ergeben sich folgende Unterschiede gegenüber der Neutralstellung der Fig. 1: Die volle Hydraulikmenge kann weiterhin aus der Auslassöffnung 3.4.2 der h-Verbindung 3.4 über den Zweig 4.2.2 des Leitungsabschnitts 4.2 durch den linken Hydromotor 33 fließen. Die Verbindungsleitung 3.3 ist aber vollständig von dem zum rechten Hydromotor 34 führenden Leitungsabschnitt 4.4 bzw. dessen Einlasszweig 4.4.1 getrennt. In gleicher Weise ist der Auslassleitungsabschnitt 4.5 vom Hydromotor 34 gegenüber der h-Verbindung 3.5 aufgrund des Rückschlagventils 4.5.1 getrennt, während weiterhin der Bypass 3.5.3 - 3.5.2 vom ersten Hydromotor 33 kommenden Leitungsabschnitt 4.3 über die h-Verbindung 3.5 zum Auslassabschnitt 4.6 gegeben ist. Insgesamt führt dies dazu, dass über den rechten Hydromotor 34 keinerlei Druckabfall mehr stattfindet, durch diesen daher keine Hydraulikflüssigkeitsströmung mehr erfolgt und er blockiert ist und damit eine scharfe Rechtskurve lediglich durch das angetriebene linke Rad 31 bewirkt wird.

Ein leichter Lenkausschlag der Wirkseite 35.3 des Lenkhebels 35 nach links bewirkt entsprechend der Fig. 4 gegenüber der Neutralstellung, dass eine Fluidverbindung zwischen dem im Einlass 3.4.1 der h-Verbindung 3.4 und den auf der gleichen Seite des Schiebers 3.2 mit Abstand benachbarten Auslass 3.4.3 zum (Einlass-)Zweig 4.4.1 des Leitungsabschnitts 4.2 hergestellt wird, so dass Hydraulikflüssigkeit im Bypass unter Umgehung des linken Hydromotors 33 unmittelbar vom Leitungsabschnitt 4.1 über den Einlass 3.4.1 der h-Verbindung, deren Auslass 3.4.3 und die Leitung 4.4 zum rechten Hydromotor 34 geführt wird. Während demgemäß so lediglich ein Teil des Hydraulikfluids durch den linken Hydromotor 33 fließt, fließt die gesamte Fluidmenge durch den rechten Hydraulikmotor 34. Dieser wird demgemäß stärker angetrieben und kann das Fahrzeug in einem leichten Bogen nach links bewegen.

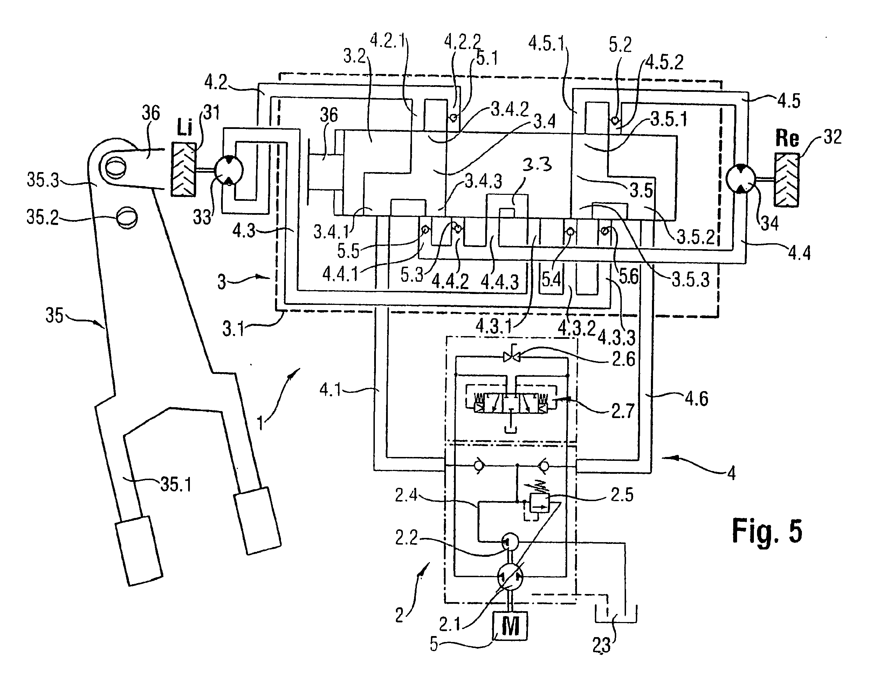

Bei stärkerem Lenkausschlag der Wirkseite 35.3 des Lenkhebels 35 nach links, wie er in der Fig. 5 dargestellt ist, wird nun der vom linken Hydromotor 33 stromab fortführende Leitungsabschnitt 4.3 vollständig von der Verbindungsleitung 3.3 des Schiebers 3.2 getrennt, während der unter Bezug auf die Fig. 4 geöffnete Bypass 3.4.1 - 3.4.3 am Hydromotor 33 vorbei offen bleibt, so dass die gesamte Hydraulikflüssikeit in der unter Bezug auf Fig. 4 beschriebenen Weise am Hydromotor 33 vorbei und über den Leitungsabschnitt 4.4 durch den rechten Hydromotor 34 strömt, so dass dieser das Fahrzeug in einer scharfen Linkskurve bewegen kann.

Bei Umkehrung der Verstellpumpe 2.1 und damit Umkehrung der Förderrichtung werden die Räder durch die Hydromotoren 33, 34 in der entgegengesetzten Richtung angetrieben, aufgrund der unter Bezug auf die Fig. 2 bis 5 beschriebenen Blockierung von Fluidverbindungen bzw. der Öffnens von Bypässen erfolgt aber die Lenkbewegung bei entsprechender Auslenkung des Lenkhebels 35 gleichsinnig.

## Patentansprüche

1. Lenkvorrichtung für ein Fahrzeug mit wenigstens einer lenkbaren Antriebsachse mit hydraulischem Einzelradantrieb, einem geschlossenen Hydraulikkreislauf (4) mit einer Verstellpumpe (2.1) zur Förderung der Hydraulikflüssigkeit in beiden die Fahrtrichtung bestimmenden Richtungen, zwei seriell geschalteten, den Antrieb bildenden Hydromotoren (33, 34) und einer durch einen Lenkhebel (35) des Fahrzeugs betätigbaren Schieberanordnung (3) mit einem Gehäuse (3.1) und einem darin beweglichen Schieber (3.2) zur Beaufschlagung der beiden Hydromotoren (33, 34) mit Hydraulikflüssigkeit in einer Antriebsströmungsrichtung, **gekennzeichnet**
**durch** eine beide Hydromotoren in Neutralstellung des Schiebers verbindende Verbindungsleitung (3.3) und Bypässe (3.4.1 - 3.4.2; 3.5.3 - 3.5.2) in der Schieberanordnung (3),
**durch** eine Neutralstellung des Schiebers (3.2) zur Geradeausfahrt, in der die Verbindungsleitung (3.3) den gesamten durch den einen Hydromotor (33) fließenden Volumenstrom der Hydraulikflüssigkeit auch durch den zweiten Hydromotor (34) leitet und in der die Bypässe (3.4.1.-3.4.2; 3.5.2-3.5.3.) gesperrt sind, und
**durch** eine Lenkstellung mit Auslenkung des Schiebers (3.2) aus seiner Neutralstellung, in der der Volumenstrom durch die Verbindungsleitung (3.3) zumindest reduziert und je nach Lenkstellung Hydraulikflüssigkeit durch einen Bypass (3.4.1 - 3.4.2; 3.5.3 - 3.5.2) an dem zugeordneten Hydromotor (33 bzw. 34) vorbeigeführt wird.

2. Vorrichtung nach Anspruch 1, **dadurch gekennzeichnet, dass** in Lenkstellung durch zumindest einen zugeordneten Bypass (3.4.1 - 3.4.2; 3.5.3 - 3.5.2) eine direkte Verbindung von der einem Hydromotor (33; 34) zuströmenden Hydraulikflüssigkeit (4.1; 4.3, 4.4) mit seiner stromab gelegenen Seite (4.4.1, 4.4; 4.6) hergestellt wird, derart, dass nur der Differenzvolumenstrom durch den gleichen Hydromotor (33; 34) fließt und somit die Umdrehungsgeschwindigkeit des entsprechenden Hydromotors (33; 34) reduziert wird.

3. Vorrichtung nach Anspruch 1 oder 2, **dadurch gekennzeichnet, dass** bei vollem Lenkausschlag die Verbindungsleitung (3.3) gesperrt ist und entsprechend der Auslenkung einer der Hydromotoren (33 bzw. 34) blockiert ist.

4. Vorrichtung nach Anspruch 3, **dadurch gekennzeichnet, dass** bei Vollauslenkung in eine Lenkrichtung der stromab gelegene Hydromotor (34) über den Bypass (3.4.1 - 3.4.3) des stromauf gelegenen Hydromotors (33) angetrieben wird und dass der stromauf gelegene Hydromotor (33) entgegen der Antriebsströmungsrichtung mit Hydraulikflüssigkeit beaufschlagt und derart blockiert wird.

5. Vorrichtung nach einem der Ansprüche 1 bis 4, **gekennzeichnet durch** zwei h-Verbindungen (3.4; 3.5) der Schieberanordnung (3), die in einer Neutralstellung für Geradeausfahrt des Schiebers (3.2) jeweils einen Leitungsabschnitt (4.1; 4.6) des Hydraulikkreislaufes (4) mit jeweils einem Hydroantrieb (33; 34) verbinden, gegenüber einem unmittelbar mit dem jeweils anderen Hydroantrieb (34; 35) verbundenen Leitungsabschnitt (4.4; 4.3) des Hydraulikkreislaufes (4) aber gesperrt sind.

6. Lenkvorrichtung nach Anspruch 5, **dadurch gekennzeichnet, dass** die h-Verbindungsleitungen im Schieber (3.2) angeordnet sind.

7. Vorrichtung nach Anspruch 5 oder 6, **dadurch gekennzeichnet, dass** die zwei h-Verbindungsleitungen (3.4; 3.5) symmetrisch zu einer zur Längsachse (m) senkrechten Mittelebene (M) des Schiebers (3.2) angeordnet sind.

8. Vorrichtung nach einem der Ansprüche 5 bis 7, **dadurch gekennzeichnet, dass** einem direkt mit der Fluidversorgung (2) in Verbindung stehenden Leitungsabschnitt (4.1; 4.6) zugeordnete Öffnungen (3.4.1; 3.5.2) in Verschiebungsrichtung des Schiebers (3.2) breiter als die zugeordneten Öffnungen des Leitungsabschnitts (4.1; 4.6) sind und insbesondere eine derartige Breite aufweisen, dass noch bei vollem Lenkausschlag des Lenkhebels (35) der volle Querschnitt der Verbindungsleitung (4.1; 4.6) in die Öffnung (3.4.1; 3.5.2) mündet.

9. Vorrichtung nach einem der Ansprüche 5 bis 8, **dadurch gekennzeichnet, dass** ein eine Verbindung zwischen einer der h-Verbindungen (3.4; 3.5) und einen ersten Hydromotor (33; 34) herstellender erster Leitungsabschnitt (4.2; 4.5) zwei Verbindungszweige (4.2.1, 4.2.2; 4.5.1; 4.5.2) aufweist, von denen der zweite mit einem eine Strömung vom ersten Leitungsabschnitt (4.2; 4.5) in die h-Verbindung (3.4; 3.5) blockierendes Rückschlagelement (5.1, 5.2) aufweist und dass in Neutralstellung und bei nicht vollem Lenkausschlag des Lenkhebels (35) die Öffnung (3.4.2) der h-Verbindung (3.4) zumindest auch mit dem Zweig (4.2.1) in Verbindung steht, aber bei Vollausschlag des Lenkhebels (35) von diesem Zweig (4.2.1) getrennt ist und nur noch mit dem mit dem Rückschlagventil (5.1) versehenen Zweig (4.2.2) in Verbindung steht.

10. Vorrichtung nach einem der Ansprüche 5 bis 9, **dadurch gekennzeichnet, dass** die Breite der zweiten Öffnung (3.4.2; 3.5.1) der h-Verbindung (3.4; 3.5) in Bewegungsrichtung des Schiebers (3.2) höchstens so groß ist, wie der Abstand der dem ersten Zweig (4.2.1; 4.5.1) abgewandten Wandung des zweiten Zweiges (4.2.2; 4.5.2) des jeweiligen Leitungsabschnitts (4.2 bzw. 4.5) zu der dem zweiten Zweig (4.2.2; 4.5.2) zugewandten Wandung des ersten Zweiges (4.2.1; 4.5.1).

11. Vorrichtung nach einem der Ansprüche 5 bis 10, **dadurch gekennzeichnet, dass** die Breite einer dritten Öffnung (3.4.3; 3.5.3) der h-Verbindung (3.4; 3.5) in Schieberichtung höchstens so groß, vorzugsweise genauso groß ist, wie der Abstand der einander zugewandten Wandungen der mit Rückschlagventilen (5.3, 5.5; 5.4; 5.6) versehenen Zweige (4.4.2, 4.4.3; 4.3.2; 4.3.3) eines weiteren Leitungsabschnitts (4.4; 4.3) von der h-Verbindung (3.5; 3.4) zum jeweils anderen Hydromotor (33; 34).

12. Vorrichtung nach einem der vorangehenden Ansprüche, **dadurch gekennzeichnet, dass** eine Bypassverbindung (3.3) bei Auslenkung des Lenkhebels (35) zwischen der ersten Öffnung (3.4.1; 3.5.1) und der dritten Öffnung (3.4.3; 3.5.3) der jeweiligen h-Verbindung (3.4; 3.5) ausschließlich zur Umgebung des Hydromotors (33; 34) hergestellt wird, in Richtung dessen zugeordneten Rades (31, 33) die Kurvenfahrt erfolgen soll.

13. Fahrzeug mit wenigstens einer lenkbaren Antriebsachse mit hydraulischem Einzelradantrieb, **gekennzeichnet durch** eine Lenkvorrichtung nach einem der Ansprüche 1 bis 12.

14. Verfahren zum lenkbaren Antreiben eines Fahrzeugs mit wenigstens einer lenkbaren Antriebsachse mit hydraulischem Einzelradantrieb, einem geschlossenen Hydraulikkreislauf (4) mit einer Verstellpumpe (2.1) zur Förderung der Hydraulikflüssigkeit in beiden die Fahrtrichtung bestimmenden Richtungen, zwei seriell geschalteten, den Antrieb bildenden Hydromotoren (33, 34) und einer durch einen Lenkhebel (35) des Fahrzeugs betätigbaren Schieberanordnung (3), mit einem Gehäuse (3.1) und einem darin beweglichen Schieber (3.2) zur Beaufschlagung der beiden Hydromotoren (33, 34) mit Hydraulikflüssigkeit in einer Antriebsströmungsrichtung, **dadurch gekennzeichnet, dass** in einer Neutralstellung des beweglichen Schiebers (3.2) zur Geradeausfahrt die Verbindungsleitung (3.3) der Schieberanordnung (3) den gesamten durch einen ersten Hydromotor (33) in Antriebsströmungsrichtung fließenden Volumenstrom der Hydraulikflüssigkeit durch den zweiten Hydromotor (34) leitet und die Bypässe (3.4.1 - 3.4.2; 3.5.3 - 3.5.2) gesperrt werden, dass zum Lenken des Fahrzeugs der Schieber (3.2) aus seiner Neutralstellung ausgelenkt wird und derart der Volumenstrom durch die Verbindungsleitung (3.3) zumindest reduziert und je nach Lenkstellung Hydraulikflüssigkeit durch einen Bypass (3.4.1 - 3.4.2 - 3.5.3 - 3.5.2) an dem zugeordneten Hydromotor vorbeigeführt wird.

15. Verfahren nach Anspruch 14, **dadurch gekennzeichnet, dass** in Lenkstellung durch zumindest einen zugeordneten Bypass (3.4.1 - 3.4.2; 3.5.3 - 3.5.2) und/oder die Verbindungsleitung (3.3) eine Verbindung für die einem Hydromotor (33 bzw. 34) zuströmende Hydraulikflüssigkeit mit der stromab gelegenen Seite des Hydromotors (34) hergestellt wird, derart, dass der Differenzvolumenstrom über den Hydromotor (33 bzw.39) strömet, damit der durch diesen fließende Volumenstrom und somit die Umdrehungsgeschwindigkeit des Hydromotors (33bzw.34) reduziert wird.

16. Verfahren nach Anspruch 14 oder 15**, dadurch gekennzeichnet, dass** bei vollem Lenkausschlag die Verbindungsleitung (3.3) gesperrt ist und entsprechend der Vollauslenkung einer der Hydromotoren (33 bzw. 34) blockiert ist.

17. Verfahren nach Anspruch 16, **dadurch gekennzeichnet, dass** bei Vollauslenkung der stromab gelegene Hydromotor durch den Bypass (3.4.1 - 3.4.3) des stromauf gelegenen Hydromotors (33) angetrieben und der stromauf gelegene Hydromotor (33) entgegen der Antriebsströmungsrichtung mit Hydraulikflüssigkeit beaufschlagt und dadurch blockiert wird.

## Claims

1. Steering device for a vehicle with at least one steerable drive axle with hydraulic single wheel drive, a closed hydraulic circuit (4) with a variable displacement pump (2.1) for conveying the hydraulic fluid in both directions which determine the direction of travel, two hydraulic motors (33, 34), which are arranged in series and form the drive, and a slider assembly (3), which can be actuated by a steering lever (35) of the vehicle, with a housing (3.1) and a slider (3.2) movable therein for acting on the two hydraulic motors (33, 34) with hydraulic fluid in a drive flow direction, **characterized**
**by** a connecting line (3.3) connecting both hydraulic motors in the neutral position of the slider and bypasses (3.4.1. - 3.4.2; 3.5.3 - 3.5.2) in the slider assembly (3),
by a neutral position of the slider (3.2) for straight-ahead travel in which the connecting line (3.3) conducts the entire volumetric flow of the hydraulic fluid, which flows through one hydraulic motor (33), also through the second hydraulic motor (34) and in which the bypasses (3.4.1 - 3.4.2; 3.5.2 - 3.5.3) are shut off, and
by a steering position with displacement of the slider (3.2) out of its neutral position in which the volumetric flow through the connecting line (3.3) is at least reduced and, depending on the steering position, hydraulic fluid is guided through a bypass (3.4.1 - 3.4.2; 3.5.3 - 3.5.2) past the assigned hydraulic motor (33 or 34).

2. Device according to Claim 1, **characterized in that** a direct connection of the hydraulic fluid (4.1; 4.3, 4.4) flowing to one hydraulic motor (33; 34) to a downstream side (4.4.1, 4.4; 4.6) is produced in the steering position by at least one assigned bypass (3.4.1 - 3.4.2; 3.5.3 - 3.5.2) such that only the differential volumetric flow flows through the same hydraulic motor (33; 34) and thus the rotational speed of the corresponding hydraulic motor (33; 34) is reduced.

3. Device according to Claim 1 or 2, **characterized in that**, in the case of full steering lock, the connecting line (3.3) is shut off and, corresponding to the deflection, one of the hydraulic motors (33 or 34) is blocked.

4. Device according to Claim 3, **characterized in that**, in the case of full deflection in one steering direction, the downstream hydraulic motor (34) is driven via the bypass (3.4.1 - 3.4.3) of the upstream hydraulic motor (33) and **in that** the upstream hydraulic motor (33) is acted upon counter to the drive flow direction with hydraulic fluid and is blocked in such a manner.

5. Device according to one of Claims 1 to 4, **characterized by** two h-connections (3.4; 3.5) of the slider assembly (3) which, in a neutral position for straight-ahead travel of the slider (3.2), in each case connect a line portion (4.1; 4.6) of the hydraulic circuit (4) to in each case a hydraulic drive (33; 34), but are blocked with respect to a line portion (4.4; 4.3), which is connected directly to the respective other hydraulic drive (34; 35), of the hydraulic circuit (4).

6. Steering device according to Claim 5, **characterized in that** the h-connecting lines are arranged in the slider (3.2).

7. Device according to Claim 5 or 6, **characterized in that** the two h-connecting lines (3.4; 3.5) are arranged symmetrically to a central plane (M) of the slider (3.2) perpendicular to the longitudinal axis (m).

8. Device according to one of Claims 5 to 7, **characterized in that** openings (3.4.1; 3.5.2) assigned to a line portion (4.1; 4.6) connected directly to the fluid supply (2) are wider in the direction of displacement of the slider (3.2) than the assigned openings of the line portion (4.1; 4.6) and in particular have such a width that, even in the case of full steering lock of the steering lever (35), the full cross-section of the connecting line (4.1; 4.6) opens into the opening (3.4.1; 3.5.2).

9. Device according to one of Claims 5 to 8, **characterized in that** a first line portion (4.2; 4.5) which produces a connection between one of the h-connections (3.4; 3.5) and a first hydraulic motor (33; 34) has two connecting branches (4.2.1, 4.2.2; 4.5.1; 4.5.2) of which the second has a non-return element (5.1; 5.2) which blocks a flow from the first line portion (4.2; 4.5) into the h-connection (3.4; 3.5) and **in that**, in the neutral position and with a less than full steering lock of the steering lever (35), the opening (3.4.2) of the h-connection (3.4) is also connected at least to the branch (4.2.1), but in the case of full lock of the steering lever (35) is separated from this branch (4.2.1) and is only still connected to the branch (4.2.2) provided with the non-return valve (5.1).

10. Device according to one of Claims 5 to 9, **characterized in that** the width of the second opening (3.4.2; 3.5.1) of the h-connection (3.4; 3.5) in the direction of movement of the slider (3.2) is at most as large as the distance from the wall, which faces away from the first branch (4.2.1; 4.5.1), of the second branch (4.2.2; 4.5.2) of the respective line portion (4.2 or 4.5) to the wall, which faces the second branch (4.2.2; 4.5.2), of the first branch (4.2.1; 4.5.1).

11. Device according to one of Claims 5 to 10, **characterized in that** the width of a third opening (3.4.3; 3.5.3) of the h-connection (3.4; 3.5) in the sliding direction is at most as large, preferably equal to the distance of the walls, which face one another, of the branches (4.4.2, 4.4.3; 4.3.2; 4.3.3), provided with non-return valves (5.3, 5.5; 5.4; 5.6), of a further line portion (4.4; 4.3) from the h-connection (3.5; 3.4) to the respective other hydraulic motor (33; 34).

12. Device according to one of the preceding claims, **characterized in that** a bypass connection (3.3) is produced exclusively for surrounding the hydraulic motor (33; 34) in the case of deflection of the steering lever (35) between the first opening (3.4.1; 3.5.1) and the third opening (3.4.3; 3.5.3) of the respective h-connection (3.4; 3.5), in the direction of the assigned wheel (31, 33) of which cornering is to take place.

13. Vehicle with at least one steerable drive axle with a hydraulic single wheel drive, **characterized by** a steering device according to one of Claims 1 to 12.

14. Method for steerable driving of a vehicle with at least one steerable drive axle with hydraulic single wheel drive, a closed hydraulic circuit (4) with a variable displacement pump (2.1) for conveying the hydraulic fluid in both directions which determine the direction of travel, two hydraulic motors (33, 34), which are arranged in series and form the drive, and a slider assembly (3), which can be actuated by a steering lever (35) of the vehicle, with a housing (3.1) and a slider (3.2) movable therein for acting on the two hydraulic motors (33, 34) with hydraulic fluid in a drive flow direction, **characterized in that**, in a neutral position of the movable slider (3.2) for straight-ahead travel, the connecting line (3.3) of the slider assembly (3) conducts the entire volumetric flow, flowing through a first hydraulic motor (33) in the drive flow direction, of the hydraulic fluid through the second hydraulic motor (34) and the bypasses (3.4.1 - 3.4.2; 3.5.3 - 3.5.2) are shut off, **in that**, for steering of the vehicle, the slider (3.2) is deflected out of its neutral position and thus the volumetric flow through the connecting line (3.3) is at least reduced and, depending on the steering position, hydraulic fluid is guided through a bypass (3.4.1 - 3.4.2 - 3.5.3 - 3.5.2) past the assigned hydraulic motor.

15. Method according to Claim 14, **characterized in that** a connection for the hydraulic fluid flowing to one hydraulic motor (33 or 34) to the downstream side of the hydraulic motor (34) is produced in the steering position by at least one assigned bypass (3.4.1 - 3.4.2; 3.5.3 - 3.5.2) and/or the connecting line (3.3) such that the differential volumetric flow flows via the hydraulic motor (33 or 34), so that the volumetric flow flowing through this and thus the rotational speed of the hydraulic motor (33 or 34) is reduced.

16. Method according to Claim 14 or 15, **characterized in that**, in the case of full steering lock, the connecting line (3.3) is shut off and, corresponding to the full deflection, one of the hydraulic motors (33 or 34) is blocked.

17. Method according to Claim 16, **characterized in that**, in the case of full deflection, the downstream hydraulic motor is driven by the bypass (3.4.1 - 3.4.3) of the upstream hydraulic motor (33) and the upstream hydraulic motor (33) is acted upon counter to the drive flow direction with hydraulic fluid and is blocked as a result.

## Revendications

1. Dispositif de direction pour un véhicule doté d'au moins un essieu d'entraînement orientable pourvu d'un entraînement individuel hydraulique des roues, d'un circuit hydraulique fermé (4) doté d'une pompe à débit variable (2.1) servant ou transport du fluide hydraulique dans les deux directions déterminant la direction d'avancée, de deux moteurs hydrauliques (33, 34) branchés en série et formant l'entraînement et d'un agencement de coulisseau (3) pouvant être actionné par le biais d'un levier de direction (35) du véhicule, composé d'un carter (3.1) et d'un coulisseau (3.2) mobile à l'intérieur servant à l'alimentation en fluide hydraulique des deux moteurs hydrauliques (33, 34) dans une direction d'écoulement de l'entraînement, **caractérisé par**:
une conduite de raccordement (3.3) reliant les deux moteurs hydrauliques dans la position neutre du coulisseau et des conduites de dérivation (3.4.1 - 3.4.2 ; 3.5.3 - 3.5.2) prévues dans l'agencement de coulisseau (3);
une position neutre du coulisseau (3.2) permettant de réaliser une sortie en ligne droite, dans laquelle la conduite de raccordement (3.3) guide également l'ensemble du débit de fluide hydraulique traversant un moteur hydraulique (33) à travers le deuxième moteur hydraulique (34) et dans laquelle les conduites de dérivation (3.4.1- 3.4.2 ; 3.5.2 - 3.5.3) sont bloquées; et
une position de direction avec déplacement du coulisseau (3.2) hors de sa position neutre, dans laquelle le débit traversant la conduite de raccordement (3.3) est au moins réduit et dans laquelle le fluide hydraulique est respectivement envoyé à travers une conduite de dérivation (3.4.1 - 3.4.2 ; 3.5.3 - 3.5.2) au niveau du moteur hydraulique (33 et/ou 34) associé, en fonction de la position de direction.

2. Dispositif selon la revendication 1, **caractérisé en ce que** dans la position de direction, un raccordement direct du fluide hydraulique (4.1 ; 4.3, 4.4) affluant du moteur hydraulique (33 ; 34) est mis en place avec son côté (4.4.1, 4.4 ; 4.6) situé en aval par le biais d'au moins une conduite de dérivation (3.4.1 - 3.4.2 ; 3.5.3 - 3.5.2) associée, de telle sorte que seule la différence de débit s'écoule à travers le même moteur hydraulique (33 ; 34), permettant ainsi de réduire la vitesse de rotation du moteur hydraulique (33 ; 34) correspondant.

3. Dispositif selon la revendication 1 ou 2, **caractérisé en ce qu'**en cas de déflexion complète, la conduite de raccordement (3.3) est bloquée et que la déviation d'un des moteurs hydrauliques (33 et/ou 34) est bloquée de façon correspondante.

4. Dispositif selon la revendication 3, **caractérisé en ce qu'**en cas de déflexion complète dans une direction orientable, le moteur hydraulique (34) placé en aval est entraîné par le biais de la conduite de dérivation (3.4.1 - 3.4.3) du moteur hydraulique (33) placé en amont et que le moteur hydraulique (33) placé en amont est alimenté en fluide hydraulique contre la direction d'écoulement de l'entraînement et ainsi bloqué.

5. Dispositif selon l'une quelconque des revendications 1 à 4, **caractérisé par** la présence de deux raccordements en h (3.4 ; 3.5) de l'agencement de coulisseau (3) reliant respectivement, dans une position neutre prévue pour la sortie en ligne droite du coulisseau (3.2), une section de conduite (4,1 ; 4.6) du circuit hydraulique (4) à un entraînement hydraulique (33 ; 34) respectif, lesdits raccordements étant en revanche bloqués par rapport à une section de conduite (4.4 ; 4.3) du circuit hydraulique (4) directement reliée à l'autre entraînement hydraulique (34 ; 35) respectif.

6. Dispositif de direction selon la revendication 5, **caractérisé en ce que** les conduites de raccordement en h sont disposées dans le coulisseau (3.2).

7. Dispositif selon la revendication 5 ou 6, **caractérisé en ce que** les deux conduites de raccordement en h (3.4 ; 3.5) sont disposées symétriquement par rapport à un plan médian (M) du coulisseau (3.2) perpendiculaire à l'axe longitudinal (m).

8. Dispositif selon l'une quelconque des revendications 5 à 7, **caractérisé en ce que** les ouvertures (3.4.1 ; 3.5.2) associées à une section de conduite (4.1 ; 4.6) directement reliée à l'alimentation en fluide (2) sont plus larges dans la direction de déplacement du coulisseau (3.2) que les ouvertures associées de la section de conduite (4.1 ; 4.6) et présentent notamment une largeur telle qu'en cas de déflexion complète du levier de direction (35), l'ensemble de la section transversale de la conduite de raccordement (4.1 ; 4.6) débouche dans l'ouverture (3.4.1 ; 3.5.2).

9. Dispositif selon l'une quelconque des revendications 5 à 8, **caractérisé en ce qu'**une première section de conduite (4.2 ; 4.5) établissant une liaison entre un des raccordements en h (3.4 ; 3.5) et un premier moteur hydraulique (33 ; 34) comporte deux branches de raccordement (4.2.1, 4.2.2 ; 4.5.1 ; 4.5.2) dont la deuxième est reliée à un élément de retenue (5.1, 5.2) bloquant un flux provenant de la première section de conduite (4.2 ; 4.5) dans le raccordement en h (3.4 ; 3.5) et que dans la position neutre et en présence d'une déflexion de direction non complète du levier de direction (35), l'ouverture (3.4.2) du raccordement en h (3.4) est au moins reliée à la branche (4.2.1) mais qu'en cas de déflexion complète, le levier de direction (35) est séparé de cette branche (4.2.1) et ne reste relié qu'à la branche (4.2.2) pourvue de la soupape de retenue (5.1).

10. Dispositif selon l'une quelconque des revendications 5 à 9, **caractérisé en ce que** la largeur de la deuxième ouverture (3.4.2 ; 3.5.1) du raccordement en h (3.4 ; 3.5) est tout au plus aussi grande dans la direction de déplacement du coulisseau (3.2) que l'écartement entre la paroi de la deuxième branche (4.2.2 ; 4.5.2) de la section de conduite (4.2 et/ou 4.5) respective opposée à la première branche (4.2.1 ; 4.5.1) et la paroi de la première branche (4.2.1 ; 4.5.1) orientée vers la deuxième branche (4.2.2 ; 4.5.2).

11. Dispositif selon l'une quelconque des revendications 5 à 10, **caractérisé en ce que** la largeur d'une troisième ouverture (3.4.3 ; 3.5.3) du raccordement en h (3.4 ; 3.5) est tout au plus aussi grande, de préférence exactement égale, dans la direction de coulissement, à l'écartement des parois orientées l'une vers l'autre des branches (4.4.2, 4.4.3 ; 4.3.2 ; 4.3.3) pourvues de soupapes de retenue (5.3, 5.5 ; 5.4 ; 5.6) d'une section de conduite (4.4 ; 4.3) supplémentaire allant du raccordement en h (3.5 ; 3.4) à l'autre moteur hydraulique (33 ; 34) respectif.

12. Dispositif selon l'une quelconque des revendications précédentes, **caractérisé en ce qu'**un raccordement de conduite de dérivation (3.3) est mis en place en cas de déflexion du levier de direction (35) entre la première ouverture (3.4.1 ; 3.5.1) et la troisième ouverture (3.4.3 ; 3.5.3) du raccordement en h (3.4 ; 3.5) respectif, exclusivement en direction de l'environnement du moteur hydraulique (33 ; 34) concerné par la conduite en virage de la roue (31, 33) associée.

13. Véhicule équipé d'au moins un essieu d'entraînement orientable avec entraînement individuel hydraulique des roues, **caractérisé par** la présence d'un dispositif de direction selon l'une quelconque des revendications 1 à 12.

14. Procédé d'entraînement orientable de véhicule doté d'au moins un essieu d'entraînement orientable pourvu d'un entraînement individuel hydraulique des roues, d'un circuit hydraulique fermé (4) doté d'une pompe à débit variable (2.1) servant à l'extraction du fluide hydraulique dans les deux directions déterminant la direction d'avancée, de deux moteurs hydrauliques (33, 34) branchés en série et formant l'entraînement et d'un agencement de coulisseau (3) pouvant être actionné par le biais d'un levier de direction (35) du véhicule, composé d'un carter (3.1) et d'un coulisseau (3.2) mobile à l'intérieur servant à l'alimentation en fluide hydraulique des deux moteurs hydrauliques (33, 34) dans une direction d'écoulement de l'entraînement, **caractérisé en ce que** dans une position neutre du coulisseau (3.2) mobile, la conduite de raccordement (3.3) de l'agencement de coulisseau (3) fait passer l'ensemble du débit de fluide hydraulique s'écoulant à travers un premier moteur hydraulique (33) dans la direction d'écoulement de l'entraînement à travers le deuxième moteur hydraulique (34) afin de réaliser une sortie en ligne droite et que les conduites de dérivation (3.4.1 - 3.4.2 ; 3.5.2 - 3.5.3) sont bloquées, que le coulisseau (3.2) est dévié hors de sa position neutre pour diriger le véhicule, de telle sorte que le débit traversant la conduite de raccordement (3.3) est au moins réduit et qu'en fonction de la position de direction, le fluide hydraulique est respectivement envoyé à travers une conduite de dérivation (3.4.1 - 3.4.2 ; 3.5.3 - 3.5.2) placée au niveau du moteur hydraulique associé.

15. Procédé selon la revendication 14, **caractérisé en ce que** dans la position de direction, un raccordement du fluide hydraulique affluant vers un moteur hydraulique (33 et/ou 34) est mis en place par le biais d'au moins une conduite de dérivation (3.4.1 - 3.4.2 ; 3.5.3 - 3.5.2) associée et/ou de la conduite de raccordement (3.3), avec le côté situé en aval du moteur hydraulique (34), de telle sorte que la différence de débit s'écoule par le biais du moteur hydraulique (33 et/ou 34), réduisant ainsi le débit traversant ledit moteur hydraulique (33 et/ou 34) et ainsi sa vitesse de rotation.

16. Procédé selon la revendication 14 ou 15, **caractérisé en ce qu'**en cas de déflexion de direction, la conduite de raccordement (3.3) est bloquée, bloquant ainsi de façon correspondante la déflexion complète d'un des moteurs hydrauliques (33 et/ou 34).

17. Procédé selon la revendication 16, **caractérisé en ce qu'**en cas de déflexion complète, le moteur hydraulique placé en aval est entraîné par la conduite de dérivation (3.4.1 - 3.4.3) du moteur hydraulique (33) placé en amont et que le moteur hydraulique (33) placé en amont est alimenté en fluide hydraulique contre la direction d'écoulement de l'entraînement et ainsi bloqué.
